# EUROPEAN PATENT SPECIFICATION

(11) **EP 3 665 919 B1**
(45) Date of publication and mention of the grant of the patent: **19.06.2024**
(21) Application number: 18765234.2
(22) Date of filing: 09.08.2018
(51) Int. Cl.: H04W 8/22

(54) **SIGNALING USER EQUIPMENT CAPABILITY INFORMATION**
SIGNALISIERUNG VON KAPAZITÄTSINFORMATIONEN EINES BENUTZERGERÄTS
SIGNALISATION D'INFORMATIONS DE CAPACITÉ D'ÉQUIPEMENT UTILISATEUR

(30) Priority: 11.08.2017 US 201762544658 P; 08.08.2018 US 201816058915
(43) Date of publication of application: 17.06.2020
(73) Proprietor: QUALCOMM Incorporated, San Diego, CA 92121-1714 (US)
(72) Inventor: PHUYAL, Umesh, San Diego California 92121-1714 (US); RICO ALVARINO, Alberto, San Diego California 92121-1714 (US); PANT, Nitin, San Diego California 92121-1714 (US); DHANDA, Mungal Singh, San Diego California 92121-1714 (US)
(74) Representative: Dunlop, Hugh Christopher
(86) International application number: PCT/US2018/046037
(87) International publication number: WO 2019/032843

(56) References cited:
- EP-A1- 2 903 363
- EP-A1- 3 101 980
- WO-A1-2011/082831
- HUAWEI ET AL: "MTC Paging transmission", 3GPP DRAFT; R2-152459 MTC PAGING TRANSMISSION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Fukuoka, Japan; 20150525 - 20150529 24 May 2015 (2015-05-24), XP050973449, Retrieved from the Internet: URL:http://www.3gpp.org/ftp/Meetings_3GPP_ SYNC/RAN2/Docs/ [retrieved on 2015-05-24]
- INTEL ET AL: "Restriction of use of Coverage Enhancement", 3GPP DRAFT; 24301_CR2762R2_(REL-14)_C1-170528-24301-CO VERAGEENH, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. CT WG1, no. Spokane, WA (USA); 20170116 - 20170120 27 February 2017 (2017-02-27), XP051231477, Retrieved from the Internet: URL:http://www.3gpp.org/ftp/Meetings_3GPP_ SYNC/CT/Docs/ [retrieved on 2017-02-27]

## Description

### BACKGROUND

### Technical Field

The present disclosure relates generally to communication systems, and more particularly, to one or more techniques for signaling user equipment (UE) capability information.

### Introduction

Wireless communication systems are widely deployed to provide various telecommunication services such as telephony, video, data, messaging, and broadcasts. Typical wireless communication systems may employ multiple-access technologies capable of supporting communication with multiple users by sharing available system resources. Examples of such multiple-access technologies include code division multiple access (CDMA) systems, time division multiple access (TDMA) systems, frequency division multiple access (FDMA) systems, orthogonal frequency division multiple access (OFDMA) systems, single-carrier frequency division multiple access (SC-FDMA) systems, and time division synchronous code division multiple access (TD-SCDMA) systems.

These multiple access technologies have been adopted in various telecommunication standards to provide a common protocol that enables different wireless devices to communicate on a municipal, national, regional, and even global level. An example telecommunication standard is 5G New Radio (NR). 5G NR is part of a continuous mobile broadband evolution promulgated by Third Generation Partnership Project (3GPP) to meet new requirements associated with latency, reliability, security, scalability (e.g., with Internet of Things (IoT)), and other requirements. Some aspects of 5G NR may be based on the 4G Long Term Evolution (LTE) standard. There exists a need for further improvements in wireless communication technology. These improvements may also be applicable to, for example, any multi-access technologies and the telecommunication standards that employ these technologies.

A UE may be configured to operate in accordance with one or more coverage modes, such as a coverage enhancement/enhanced (CE) mode or a non-CE mode. The UE may be configured to perform one or more functions corresponding to each of the one or more coverage modes. A function corresponding to a coverage mode may include one or more parameters. However, a UE may not support a function or a particular parameter of the function. Unless a base station knows that the UE may not support the function or the particular parameter of the function, the base station may be configured to send information relating to the function or the particular parameter. Therefore, there remains a need to increase bandwidth consumption efficiency by, for example, reducing unnecessary transmission of information that the UE cannot use because it relates to a function or a particular parameter of the function that the UE may not be configured to support or otherwise perform.

EP3101980 relates to radio communication system which performs a communication control in order to enhance coverage. EP2903363 relates to a network which supports different types of user equipment which have particular signaling requirements. WO2011/082831 relates to a method of determining geographical determination of coverage in a mobile communications system by obtaining measurement data provided by a plurality of mobile terminals. Huawei et al.; 3GPP Contribution R1-152459 relates to paging from RAN2 perspective. Intel et al.; 3GPP Contribution C1-170528 relates to new UE capability for restriction of use of enhanced coverage.

### SUMMARY

The following presents a simplified summary of one or more aspects in order to provide a basic understanding of such aspects. This summary is not an extensive overview of all contemplated aspects, and is intended to neither identify key or critical elements of all aspects nor delineate the scope of any or all aspects. Its sole purpose is to present some concepts of one or more aspects in a simplified form as a prelude to the more detailed description that is presented later.

More particularly the invention discloses a method, a computer-readable medium, and an apparatus as set out in claims 1, 7 and 13.

To the accomplishment of the foregoing and related ends, the one or more aspects comprise the features hereinafter fully described and particularly pointed out in the claims. The following description and the annexed drawings set forth in detail certain illustrative features of the one or more aspects.

### BRIEF DESCRIPTION OF THE DRAWINGS

FIG. 1 is a diagram illustrating an example of a wireless communications system and an access network.
FIGs. 2A, 2B, 2C, and 2D are diagrams illustrating examples of a DL frame structure, DL channels within the DL frame structure, an UL frame structure, and UL channels within the UL frame structure, respectively.
FIG. 3 is a diagram illustrating an example of a base station and user equipment (UE) in an access network.
FIG. 4 is a diagram illustrating a base station in communication with a UE.
FIG. 5 illustrates an example flow diagram between a UE and a base station.
FIG. 6 is a flowchart of a method of wireless communication.
FIG. 7 is a flowchart of a method of wireless communication.
FIG. 8 is a conceptual data flow diagram illustrating the data flow between different means/components in an exemplary apparatus.
FIG. 9 is a diagram illustrating an example of a hardware implementation for an apparatus employing a processing system.

### DETAILED DESCRIPTION

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. In some instances, well known structures and components are shown in block diagram form in order to avoid obscuring such concepts.

Several aspects of telecommunication systems will now be presented with reference to various apparatus and methods. These apparatus and methods will be described in the following detailed description and illustrated in the accompanying drawings by various blocks, components, circuits, processes, algorithms, etc. (collectively referred to as "elements"). These elements may be implemented using electronic hardware, computer software, or any combination thereof. Whether such elements are implemented as hardware or software depends upon the particular application and design constraints imposed on the overall system.

By way of example, an element, or any portion of an element, or any combination of elements may be implemented as a "processing system" that includes one or more processors. Examples of processors include microprocessors, microcontrollers, graphics processing units (GPUs), central processing units (CPUs), application processors, digital signal processors (DSPs), reduced instruction set computing (RISC) processors, systems on a chip (SoC), baseband processors, field programmable gate arrays (FPGAs), programmable logic devices (PLDs), state machines, gated logic, discrete hardware circuits, and other suitable hardware configured to perform the various functionality described throughout this disclosure. One or more processors in the processing system may execute software. Software shall be construed broadly to mean instructions, instruction sets, code, code segments, program code, programs, subprograms, software components, applications, software applications, software packages, routines, subroutines, objects, executables, threads of execution, procedures, functions, etc., whether referred to as software, firmware, middleware, microcode, hardware description language, or otherwise.

Accordingly, in one or more example embodiments, the functions described may be implemented in hardware, software, or any combination thereof. If implemented in software, the functions may be stored on or encoded as one or more instructions or code on a computer-readable medium. Computer-readable media includes computer storage media. Storage media may be any available media that can be accessed by a computer. By way of example, and not limitation, such computer-readable media can comprise a random-access memory (RAM), a read-only memory (ROM), an electrically erasable programmable ROM (EEPROM), optical disk storage, magnetic disk storage, other magnetic storage devices, combinations of the aforementioned types of computer-readable media, or any other medium that can be used to store computer executable code in the form of instructions or data structures that can be accessed by a computer.

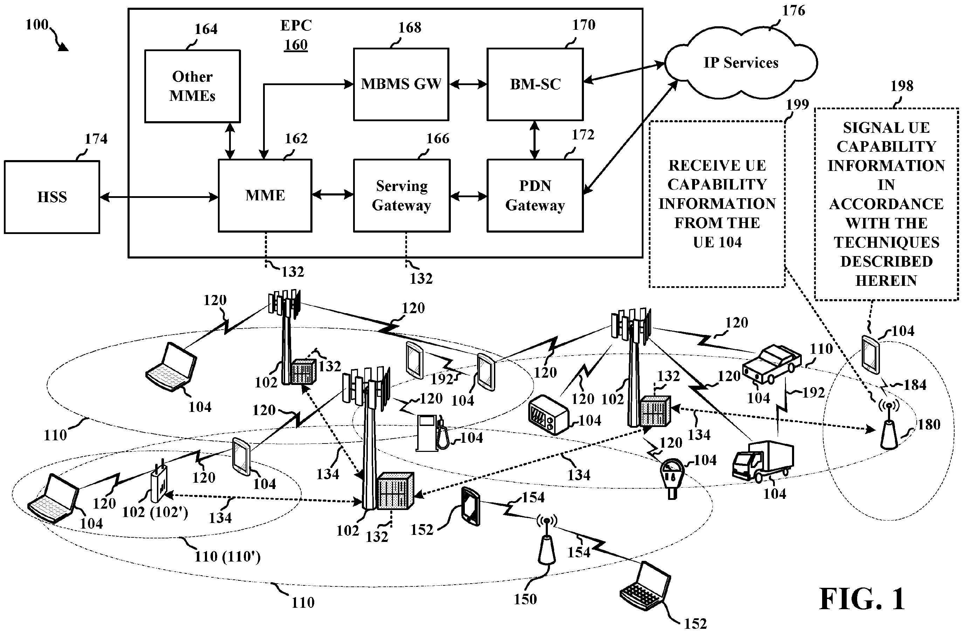

FIG. 1 is a diagram illustrating an example of a wireless communications system and an access network 100. The wireless communications system (also referred to as a wireless wide area network (WWAN)) includes base stations 102, UEs 104, and an Evolved Packet Core (EPC) 160. The base stations 102 may include macro cells (high power cellular base station) and/or small cells (low power cellular base station). The macro cells include base stations. The small cells include femtocells, picocells, and microcells.

The base stations 102 (collectively referred to as Evolved Universal Mobile Telecommunications System (UMTS) Terrestrial Radio Access Network (E-UTRAN)) interface with the EPC 160 through backhaul links 132 (e.g., S1 interface). In addition to other functions, the base stations 102 may perform one or more of the following functions: transfer of user data, radio channel ciphering and deciphering, integrity protection, header compression, mobility control functions (e.g., handover, dual connectivity), inter-cell interference coordination, connection setup and release, load balancing, distribution for non-access stratum (NAS) messages, NAS node selection, synchronization, radio access network (RAN) sharing, multimedia broadcast multicast service (MBMS), subscriber and equipment trace, RAN information management (RIM), paging, positioning, and delivery of warning messages. The base stations 102 may communicate directly or indirectly (e.g., through the EPC 160) with each other over backhaul links 134 (e.g., X2 interface). The backhaul links 134 may be wired or wireless.

The base stations 102 may wirelessly communicate with the UEs 104. Each of the base stations 102 may provide communication coverage for a respective geographic coverage area 110. There may be overlapping geographic coverage areas 110. For example, the small cell 102' may have a coverage area 110' that overlaps the coverage area 110 of one or more macro base stations 102. A network that includes both small cell and macro cells may be known as a heterogeneous network. A heterogeneous network may also include Home Evolved Node Bs (eNBs) (HeNBs), which may provide service to a restricted group known as a closed subscriber group (CSG). The communication links 120 between the base stations 102 and the UEs 104 may include uplink (UL) (also referred to as reverse link) transmissions from a UE 104 to a base station 102 and/or downlink (DL) (also referred to as forward link) transmissions from a base station 102 to a UE 104. The communication links 120 may use multiple-input and multiple-output (MIMO) antenna technology, including spatial multiplexing, beamforming, and/or transmit diversity. The communication links may be through one or more carriers. The base stations 102 / UEs 104 may use spectrum up to *Y* MHz (e.g., 5, 10, 15, 20, 100 MHz) bandwidth per carrier allocated in a carrier aggregation of up to a total of *Yx* MHz (x component carriers) used for transmission in each direction. The carriers may or may not be adjacent to each other. Allocation of carriers may be asymmetric with respect to DL and UL (e.g., more or less carriers may be allocated for DL than for UL). The component carriers may include a primary component carrier and one or more secondary component carriers. A primary component carrier may be referred to as a primary cell (PCell) and a secondary component carrier may be referred to as a secondary cell (SCell).

Certain UEs 104 may communicate with each other using device-to-device (D2D) communication link 192. The D2D communication link 192 may use the DL/UL WWAN spectrum. The D2D communication link 192 may use one or more sidelink channels, such as a physical sidelink broadcast channel (PSBCH), a physical sidelink discovery channel (PSDCH), a physical sidelink shared channel (PSSCH), and a physical sidelink control channel (PSCCH). D2D communication may be through a variety of wireless D2D communications systems, such as for example, FlashLinQ, WiMedia, Bluetooth, ZigBee, Wi-Fi based on the IEEE 802.11 standard, LTE, or NR.

The wireless communications system may further include a Wi-Fi access point (AP) 150 in communication with Wi-Fi stations (STAs) 152 via communication links 154 in a 5 GHz unlicensed frequency spectrum. When communicating in an unlicensed frequency spectrum, the STAs 152 / AP 150 may perform a clear channel assessment (CCA) prior to communicating in order to determine whether the channel is available.

The small cell 102' may operate in a licensed and/or an unlicensed frequency spectrum. When operating in an unlicensed frequency spectrum, the small cell 102' may employ NR and use the same 5 GHz unlicensed frequency spectrum as used by the Wi-Fi AP 150. The small cell 102', employing NR in an unlicensed frequency spectrum, may boost coverage to and/or increase capacity of the access network.

The base station 180 (i.e., an example of a base station depicted in FIG. 1) may communicate with the UE 104 using various frequencies. For example, the base station may operate in millimeter wave (mmW) frequencies and/or near mmW frequencies in communication with the UE 104. The base station 180 may be any type of base station, such as an evolved NodeB (eNB), a gNodeB (gNB), or any other type of base station. In examples where the base station 180 operates in mmW or near mmW frequencies, the base station 180 may be referred to as an mmW base station. Extremely high frequency (EHF) is part of the RF in the electromagnetic spectrum. EHF has a range of 30 GHz to 300 GHz and a wavelength between 1 millimeter and 10 millimeters. Radio waves in the band may be referred to as a millimeter wave. Near mmW may extend down to a frequency of 3 GHz with a wavelength of 100 millimeters. The super high frequency (SHF) band extends between 3 GHz and 30 GHz, also referred to as centimeter wave. Communications using the mmW / near mmW radio frequency band has extremely high path loss and a short range. In examples where the base station 180 operates in mmW or near mmW frequencies, the base station 180 may utilize beamforming 184 with the UE 104 to compensate for the extremely high path loss and short range.

The EPC 160 may include a Mobility Management Entity (MME) 162, other MMEs 164, a Serving Gateway 166, a Multimedia Broadcast Multicast Service (MBMS) Gateway 168, a Broadcast Multicast Service Center (BM-SC) 170, and a Packet Data Network (PDN) Gateway 172. The MME 162 may be in communication with a Home Subscriber Server (HSS) 174. The MME 162 is the control node that processes the signaling between the UEs 104 and the EPC 160. Generally, the MME 162 provides bearer and connection management. All user Internet protocol (IP) packets are transferred through the Serving Gateway 166, which itself is connected to the PDN Gateway 172. The PDN Gateway 172 provides UE IP address allocation as well as other functions. The PDN Gateway 172 and the BM-SC 170 are connected to the IP Services 176. The IP Services 176 may include the Internet, an intranet, an IP Multimedia Subsystem (IMS), a PS Streaming Service, and/or other IP services. The BM-SC 170 may provide functions for MBMS user service provisioning and delivery. The BM-SC 170 may serve as an entry point for content provider MBMS transmission, may be used to authorize and initiate MBMS Bearer Services within a public land mobile network (PLMN), and may be used to schedule MBMS transmissions. The MBMS Gateway 168 may be used to distribute MBMS traffic to the base stations 102 belonging to a Multicast Broadcast Single Frequency Network (MBSFN) area broadcasting a particular service, and may be responsible for session management (start/stop) and for collecting eMBMS related charging information.

A base station (e.g., any base station described herein, such as a base station 102 or base station 180) may also be referred to as a gNB, Node B, evolved Node B (eNB), an access point, a base transceiver station, a radio base station, a radio transceiver, a transceiver function, a basic service set (BSS), an extended service set (ESS), or some other suitable terminology. A base station (e.g., any base station described herein, such as a base station 102 or base station 180) provides an access point to the EPC 160 for a UE 104. Examples of UEs 104 include a cellular phone, a smart phone, a session initiation protocol (SIP) phone, a laptop, a personal digital assistant (PDA), a satellite radio, a global positioning system, a multimedia device, a video device, a digital audio player (e.g., MP3 player), a camera, a game console, a tablet, a smart device, a wearable device, a vehicle, an electric meter, a gas pump, a large or small kitchen appliance, a healthcare device, an implant, a display, or any other similar functioning device. Some of the UEs 104 may be referred to as loT devices (e.g., parking meter, gas pump, toaster, vehicles, heart monitor, etc.). The UE 104 may also be referred to as a station, a mobile station, a subscriber station, a mobile unit, a subscriber unit, a wireless unit, a remote unit, a mobile device, a wireless device, a wireless communications device, a remote device, a mobile subscriber station, an access terminal, a mobile terminal, a wireless terminal, a remote terminal, a handset, a user agent, a mobile client, a client, or some other suitable terminology.

Referring again to FIG. 1, in certain aspects, the UE 104 may be configured to signal UE capability information in accordance with the techniques described herein (198). For example, the UE 104 may be configured to signal UE capability information to any base station described herein, such as the base station 180. As another example, the UE 104 may be configured to perform any technique described herein with respect to any UE (e.g., UE 350, UE 502, apparatus 802, apparatus 902', or another UE, device, or apparatus described herein)..

The base station 180 may be configured to receive UE capability information in accordance with the techniques described herein (199). The base station 180 may be configured to receive UE capability information from the UE 104. In some examples, the base station 180 may be configured to request the UE capability information from the UE 104. In other examples, the base station 180 may be configured to receive UE capability information from the UE 104 without having requested such information from the UE 104. The base station 180 may be configured to transmit data to the UE 104 based on the UE capability information received from the UE 104. For example, the data transmission performed by the base station 180 to the UE 104 may only be performed within the capabilities of the UE 104. For example, if the UE 104 is not capable of performing carrier aggregation, then the base station 102 may be configured to transmit data to the UE 104 in a manner that would not require the UE 104 to perform carrier aggregation (e.g., demodulation of an aggregated carrier signal).

As used herein, reference to a device (e.g., the UE 104) being configured to signal information (e.g., device capability information) may refer to the device being configured to transmit or otherwise send the information. Similarly, reference to a device (e.g., the UE 104) being configured send information (e.g., device capability information) may refer to the device being configured to transmit or signal the information. For example, reference to the UE 104 being configured to signal UE capability information may include reference to the UE 104 being configured to transmit or otherwise send the UE capability information. In some examples, the terms "transmit" and "send" may be synonymous. As used herein, UE capability information may also be referred to as capability information of the UE. For example, the UE 104 may be configured to signal UE capability information, the UE capability information being or otherwise including capability information of the UE 104. UE capability information may include one or more capabilities of the UE. As an example, a capability of a UE may refer to a function, operation, feature, or the like corresponding to the UE that the UE (1) supports or does not support and/or (2) has been tested and verified or not tested.

The UE 104 may be configured to send UE capability information to the base station 180 without receiving a request for UE capability information. For example, the UE 104 may be configured to send UE capability information to the base station 180 without receiving a request for UE capability information from the base station 180. In other examples, the UE 104 may be configured to send UE capability information to the base station 180 in response to receiving a request for UE capability information. For example, the UE 104 may be configured to send UE capability information to the base station 180 in response to receiving a request from the base station for UE capability information. In such examples, the request received from the base station 180 for the UE capability information may be referred to as a UE capability enquiry. A UE being configured to send UE capability information may, in some examples, refer to the UE being configured to send UE capability information to a destination, such as another device (e.g., the base station 180 or another UE).

In some examples, the UE 104 may be configured to send UE capability information in response to a trigger. The trigger may, in some examples, include reception of a request for UE capability information. As used herein, a request for UE capability information may also be referred to as a UE capability request. In such examples, the UE 104 may be configured to receive the request for UE capability information from another device, such as the base station 180 or another UE. In other examples, the trigger may not include reception of a UE capability request. For example, instead of being configured to send UE capability information in response to a UE capability request, the UE 104 may be configured to send UE capability information based on a different trigger. As an example, the trigger may include a coverage mode change initiated by the UE 104. In this example, the UE 104 may be configured to autonomously send UE capability information since the coverage mode change was not initiated by another device. As another example, the trigger may include a coverage mode initiated by the base station 180. In this example, the base station 180 may be configured to send a request to the UE 104 to request or schedule a change in coverage mode for the UE 104. A change in coverage mode may refer to a switch from a first coverage mode to a second coverage mode. In response to changing the coverage mode in which the UE 104 is configured to operate (e.g., in response to an example trigger), the UE 104 may be configured to send UE capability information.

Regarding coverage mode, the UE 104 may be configured to operate in accordance with one or more coverage modes. The UE 104 may be configured to perform one or more functions (which may also be referred to as one or more features) corresponding to each of the one or more coverage modes. A function corresponding to a coverage mode may include one or more parameters. The one or more parameters may affect the function with which they are associated. For example, a parameter may have a corresponding value, which may, in some examples, vary in value within a range based on one or more capabilities of the UE 104. The UE may be configured to operate in a coverage mode by being configured to perform one or more functions corresponding to the coverage mode.

In some examples, the UE 104 may not support one or more functions and/or one or more parameters (e.g., one or more values corresponding to the one or more values) corresponding to a coverage mode. For example, the UE 104 may be configured to perform a first function (e.g., carrier aggregation or another function) in a first coverage mode (i.e., when configured to operate in the first coverage mode), but the UE 104 may not be configured to perform the first function (e.g., carrier aggregation or another function) in a second coverage mode (i.e., when configured to operate in the second coverage mode).

As another example, the UE 104 may be configured to perform a second function in a first coverage mode and a second coverage mode; however, a parameter associated with the second function may be different between the first and second coverage modes. Therefore, while the UE 104 may be configured to switch from a first coverage mode to a second coverage mode, there may be differences between the two coverage modes. In some examples, a difference between two coverage modes may correspond to the UE 104 being capable of performing an example function in a first mode but not a second mode. A difference between two coverage modes may correspond to the UE 104 being capable of performing an example function in a first mode and a second mode; however, one of the parameters of the example function may be different in the first mode and the second mode. For example, the value or values corresponding to the parameter may be different. As another example, the parameter may be a first parameter in the first coverage mode and a second parameter in the second coverage mode. In these examples, the UE 104 may be capable of performing the example function in the first mode differently from performing the example function in the second mode.

The UE 104 may be configured to send UE capability information because the capabilities of the UE 104 may differ across different coverage modes. In some examples, the UE capability information may be based on a predetermination of one or more capabilities of the UE that may differ between a first coverage mode and a second coverage mode. For example, the UE capability information may be based on whether one or more capabilities of the UE differs or is the same between a first coverage mode and a second coverage mode. Therefore, to reduce unnecessary bandwidth consumption by the base station 180 assuming one or more capabilities of the UE 104, the UE 104 may be configured to send UE capability information in accordance with the techniques described herein. Without the UE capability information, the base station 180 may send information regarding a function or parameter of a coverage mode that the UE 104 does not support (i.e., the UE supports the coverage mode but not the function or parameter). Because the UE 104 does not support the function or parameter, the information transmitted by the base station 180 regarding the function or parameter unnecessarily consumed bandwidth.

As described above, the UE 104 may be configured to switch from a first coverage mode to a second coverage mode. For example, the UE 104 may be configured to operate in a first coverage during a first period of time and a second coverage mode during a second period of time. As described herein, a coverage mode may, in some examples, refer to a coverage enhancement/enhanced (CE) mode or a non-CE mode. A non-CE mode may refer to a normal coverage mode. A CE mode may refer to CE mode A, CE mode B, or a CE mode different from CE mode A and CE mode B. In some examples, a non-CE mode may provide less coverage than a CE mode. Otherwise described, a CE may provide more coverage than a non-CE mode.

In some examples, CE mode A may support less capabilities CE than CE mode B. For example, CE mode A may support less repetitions in transmissions (e.g., by the UE 104 and/or the base station 180) than CE mode B. Otherwise described, CE mode B may support more transmission repetitions (e.g., by the UE 104 and/or the base station 180) than CE mode A. In some examples, CE mode A may not employ any repetitions while still supporting CE relative to a non-CE mode (e.g., a normal coverage mode). In some examples, CE mode A and/or CE mode B may include subframe repetition, frequency hopping, boosting of reference symbols, increased transmit power, an enhanced Physical Random Access Channel (PRACH), and/or one or more features. For example, a UE (e.g., UE 104) configured to operate in a CE mode may be configured to operate in accordance with one or more of these features.

In some examples, coverage may refer to a distance over which a transmission may be received and/or transmitted. For example, as the distance between transmission and reception increases, an information-bearing signal may attenuate and/or become more susceptible to noise (e.g., due to the attenuation or increased chance of encountering more noise due to the larger distance of travel). Therefore, a UE configured to operate in accordance with a non-CE mode may be configured to successfully transmit information a first distance; and, when configured to operate in accordance with a CE mode, the UE may be configured to successfully transmit information a second distance. In such an example, the second distance may be larger than the first distance. Similarly, a UE configured to operate in accordance with a non-CE mode may be configured to successfully receive information over a first distance (e.g., from a base station); and, when configured to operate in accordance with a CE mode, the UE may be configured to successfully receive information over a second distance (e.g., from a base station). In such an example, the second distance may be larger than the first distance.

In other examples, coverage may refer to a difference in configuration of the UE such that the UE may transmit and/or receive an information-bearing signal in accordance with the coverage mode corresponding to the coverage. For example, when configured to operate in a first coverage mode, the UE may be configured to transmit and/or receive an information-bearing signal having a first set of properties; and, when configured to operate in a second coverage mode, the UE may be configured to transmit and/or receive an information-bearing signal having a second set of properties. In some examples, the first and second properties may differ in amplitude, channel bandwidth, period, repetitions, and/or one or more other properties.

A UE may be configured to support one or more features in a first coverage mode while one or more other features in a second coverage mode, or vice-versa. In some examples, a feature may be referred to as a function, operation, capability, or the like corresponding to the particular coverage mode. For example, an aggregation feature may be referred to as an aggregation function. As another example, a Channel Signal Information (CSI) Reference Signal (RS) reporting feature may be referred to as a CSI-RS reporting function. However, currently available capability indications may be insufficient to effectively indicate a UE's capability differentiation between two or more coverage modes.

A UE may be configured to indicate its support of certain features corresponding to a coverage mode using UE capability signaling in response to receiving a UE capability request from a base station as described herein. For example, with CE modes, the UE may be configured to send limited capability information to the base station regarding only six parameters, which is very limiting and does not allow for more enhanced UE capabilities signaling like the techniques described herein. For example, in accordance with the techniques described herein and among other benefits, bandwidth consumption may be reduced, backwards compatibility may be enabled or enhanced. However, referring back to the six parameters, a first parameter of the six parameters may indicate whether the UE supports operation in CE mode A. A second parameter of the six parameters may indicate whether the UE supports operation in CE mode B. A third parameter of the six parameters may be an inter-frequency CE mode A parameter that may indicate whether the UE, when operating in CE Mode A, supports a handover triggering event for intra-frequency neighbouring cells in normal coverage and CE Mode A. Similarly, a fourth parameter of the six parameters may be an inter-frequency CE mode B parameter that may indicate whether the UE, when operating in CE Mode B, supports a handover triggering event for intra-frequency neighbouring cells in normal coverage, CE Mode A, and CE Mode B. In some examples, the handover triggering event may refer to the triggering event of a neighbouring cell becoming better than the serving cell by an offset. A fifth parameter of the six parameters may be an inter-frequency handover CE mode A parameter that may indicate whether the UE, when operating in CE Mode A, supports intra-frequency handover to a target cell in normal coverage and CE Mode A. Similarly, a sixth parameter of the six parameters may be an inter-frequency handover CE mode B parameter that may indicate whether the UE, when operating in CE Mode B, supports intra-frequency handover to a target cell in normal coverage, CE Mode A, or CE Mode B.

The limited UE capability signalling described above corresponding to only the six parameters provides little information. For example, without the techniques described herein, the UE capability signalling corresponding to these six parameters does not include the signalling of any information that indicates one or more capabilities of a UE that may differ between a first coverage mode and a second coverage mode. For example, a UE may support (or may have been tested and verified for) one or more features in a first coverage mode (e.g., a normal coverage mode, which may be one example of a non-CE mode) but the UE may not support (or may not have been tested and verified for) the same one or more features in a second coverage mode (e.g., a CE mode), or vice-versa. As another example, while a UE may be configured to separately indicate whether the UE has been tested and verified for intra-frequency HO in CE Mode A or CE mode B as described above, there may be many other features that may be (1) supported or not supported and/or (2) tested and verified or not tested by or otherwise for a UE in a first coverage mode versus a second coverage mode. For example, there may be many other features that may be (1) supported or not supported and/or (2) tested and verified or not tested by or otherwise for a UE in a first coverage mode compared to those other feature in a second coverage mode.

As an example, consider support for physical downlink shared channel (PDSCH) transmission mode 9 with 8 Channel Signal Information (CSI) Reference Signal (RS) ports for Frequency Division Duplex (FDD). A UE supporting this feature may indicate the support with an information element. However, a UE that supports this feature in a first coverage mode (e.g., a non-CE mode) may not support this same feature in a second coverage mode (e.g., a CE mode, such as CE mode A or CE mode B). For this particular example, even if the UE supports this feature, there may not be an opportunity for the UE to test or verify this feature in the second coverage mode (e.g., due to the unavailability of deployment of this feature on the network side, such as on a base station) for the second coverage mode. However, currently it is not possible for a UE to indicate that the UE supports (or has been tested and verified for) this feature for a first coverage mode but not for a second coverage mode. This is just one example. Other features (e.g., mobility support, Inter-radio access technology (RAT) support, band and band combinations support, or other features) may similarly be supported by (or have been tested and verified for) the UE in a first coverage mode but not for a second coverage mode.

In accordance with the techniques described herein, the UE may be configured to signal UE capability information that differentiates the capability of the UE for one or more features that may differ between different modes (e.g., between a first coverage mode and a second coverage mode). For example, the UE may be configured to signal UE capability information that indicates the differentiation in support (or differentiation in having been tested and verified) for one or more features that may differ between a first coverage mode and a second coverage mode. As another example, the UE capability information may be based on a predetermination of one or more capabilities of the UE that may differ between a first coverage mode and a second coverage mode.

In some examples, one or more example techniques below may be implemented or otherwise effectuated to address the problem of the limited nature of current UE capability signalling. One or more techniques described herein may be combined in any combination.

In some examples, new IEs and/or capability bits may be signalled for features that may differ between different coverage modes. For example, the UE may be configured to signal UE capability information that includes one or more IEs, one or more fields, and/or one or more capability bits for each feature that may differ between different coverage modes. In some examples, the referenced one or more features that may differ between different coverage modes may not include the features corresponding to the six parameters described above. As one example, the UE may be configured to signal UE capability information that includes an IE, a field, and/or one or more capability bits corresponding to a feature relating to transmission mode 9 in CE mode A to indicate whether the UE supports (or has been tested and verified for) transmission mode 9 (tm9) in CE mode A. Similarly, the UE may be configured to signal UE capability information that includes an IE, a field, and/or one or more capability bits corresponding to a feature relating to transmission mode 9 in CE mode A to indicate whether the UE supports (or has been tested and verified for) tm9 in CE mode B.

In some examples, a separate set of capabilities may be signalled for CE mode features. For example, a UE may be configured to signal new IEs and/or capability bits to indicate the capability applicable to UE operation in both CE modes A and B (in this example, the new IE may be called UE-Capability-CE-Mode), or separately for CE mode A (in this example, the new IE may be called UE-Capability-CE-ModeA) and separately for CE mode B (in this example, the new IE may be called UE-Capability-CE-ModeA). In one example, a full set of capabilities may be transmitted for a CE mode. In another example, for optimized signalling, only the features for which the support needs to be differentiated may be indicated in signalled CE capability information. In this example, one or more first capabilities (e.g., one or more legacy capabilities, such as one or more non-CE mode capabilities) may apply for one or more features not explicitly indicated in the CE-specific signalling (e.g., the signalled CE capability information). In some examples, the set of new capabilities may include a subset of the IEs for a normal coverage (non-CE) UE. For example, it may not make sense (e.g., due to inefficiency) to signal capabilities that are not supported (or that have not been tested) by a UE in CE Mode, such as UL MIMO, carrier aggregation, CSI-RS reporting, or one or more other features.

In some examples, a UE may include one or more capabilities that may (and/or or do) differ between a first coverage mode and a second coverage mode. For example, the UE may be configured to support a particular capability in the first coverage mode but not the second coverage mode. The one or more capabilities of the UE may be predetermined to differ between a first coverage mode and a second coverage mode. In some examples, the predetermination may be based on information received from a base station. For example, a base station may send (e.g., broadcast) information to a UE. In one example, the information may identify one or more capabilities of the UE that may differ between the first coverage mode and the second coverage mode. In another example, the information may identify one or more capabilities of the UE that differ between the first coverage mode and the second coverage mode.

In other examples, the predetermination may be based on a standard. For example, the predetermination may be information in the standard. In one example, the information in the standard may identify one or more capabilities of the UE that may differ between the first coverage mode and the second coverage mode. In another example, the information in the standard may identify one or more capabilities of the UE that differ between the first coverage mode and the second coverage mode. A standard may refer to a standard specification, a technical specification, or the like.

For example, a UE may have a plurality of capabilities. Each respective capability of the plurality of capabilities may correspond to a respective difference indicator in a standard. The difference indicator may indicate whether the UE's support for the capability differs between two or more coverage modes. For example, the difference indicator for a particular capability/feature may indicate whether there are differences or whether there may be differences between two or more coverage modes. As another example, the difference indicator for a particular capability may indicate that there is no difference between two or more modes. The table below shows one example of a difference indicator (which may also be referred to as a capability difference indicator) relative to the example feature/capability bandEUTRA. The capability difference indicator (CDI) value may be a value within a plurality of values. For example, the CDI value may be a binary value (e.g., the plurality of values may include two values). In some examples, a first CDI value may indicate that the UE capability in a first coverage mode (e.g., a CE mode) is different from the UE capability in a second coverage mode (e.g., a non-CE mode, such as a legacy non-CE mode). A second CDI value may indicate that the UE capability in the first coverage mode (e.g., a CE mode) is the same as the UE capability in the second coverage mode (e.g., a non-CE mode, such as a legacy non-CE mode). Relative to the example below, the UE capability may be bandEUTRA. If the CDI value is the first value, that would indicate that the UE's bandEUTRA capability is different between a first coverage mode and a second coverage mode. However, if the CDI value is the second value, then that would indicate that the UE's bandEUTRA capability is the same (e.g., not different) between the first coverage mode and the second coverage mode.

| ***UE-EUTRA-Capability* field descriptions** | ***Capability Difference Indicator (CDI)*** |
|---|---|
| ***bandEUTRA*** | CDI Value |
| E-UTRA band as defined in TS 36.101 [42]. In case the UE includes *bandEUTRA-v9e0* or *bandEUTRA-v1090,* the UE shall set the corresponding entry of *bandEUTRA* (i.e. without suffix) or *bandEUTRA-r10* respectively *maxFBI.* | |

In other examples, a first CDI value may indicate that the UE capability in a CE mode is different from the UE capability in a non-CE mode, such as a legacy non-CE mode). A second CDI value may indicate that the UE capability in a CE mode is the same as the UE capability in a non-CE mode, such as a legacy non-CE mode. A third CDI value may indicate that the UE capability in a first CE mode (e.g., CE mode A) is different from the UE capability in a second CE mode (e.g., CE mode B). A fourth CDI value may indicate that the UE capability in a first CE mode (e.g., CE mode A) is the same as the UE capability in a second CE mode (e.g., CE mode B). A fifth CDI value may indicate that the UE capability in a CE mode is different from the UE capability in a non-CE mode, and that the UE capability is the same for a plurality of CE modes (e.g., the UE capability is the same for CE mode A and CE mode B). Relative to the bandEUTRA example above, the UE capability may be bandEUTRA. If the CDI value is the first value, that would indicate that the UE's bandEUTRA capability is different between a CE mode and a non-CE mode. If the CDI value is the second value, then that would indicate that the UE's bandEUTRA capability is the same (e.g., not different) between the CE mode and the non-CE mode. If the CDI value is the third value, then that would indicate that the UE's bandEUTRA capability is different between a first CE mode and a second CE mode. If the CDI value is the fourth value, then that would indicate that the UE's bandEUTRA capability is the same between a first CE mode and a second CE mode. If the CDI value is the fifth value, then that would indicate that the UE's bandEUTRA capability is different between a CE mode (e.g., CE mode or CE mode B) and a non-CE mode and is the same between a plurality of CE modes (e.g., CE mode A and CE mode B).

Based on the examples herein, for optimized signalling, a UE may be configured to send UE capability information corresponding only to features that may be different (or are in fact different) between different coverage modes.

In some examples, in response to switching from a first coverage mode (e.g., a non-CE mode) to a second coverage mode (e.g., a CE mode), the UE may be configured to report a different set of capabilities. For example, in response to or otherwise following a Radio Resource Control (RRC) re-configuration of the UE (which may, in some examples, be performed to configure the UE to operate in the second coverage mode), the UE may be configured to signal a new set of capabilities only for the second coverage mode in UE capability information. As another example, upon configuration in CE Mode, the UE may be configured to report a different set of capabilities. For example, in response to or otherwise following an RRC re-configuration of the UE (which may, in some examples, be performed to configure the UE to operate in CE mode), the UE may be configured to signal a new set of capabilities only for the CE mode in UE capability information.

The capabilities of a UE may be for indication that the UE (1) supports or does not support and/or (2) has been tested and verified or not tested for separate features/functionalities, such as physical layer parameters (e.g., transmission mode support, antenna selection support), mobility parameters (e.g., parameters related to inter-RAT mobility or measurement gaps), or band support (e.g. a UE may support a given frequency band in a first coverage mode (e.g., non-CE mode) but not in a second coverage mode (e.g., CE mode)).

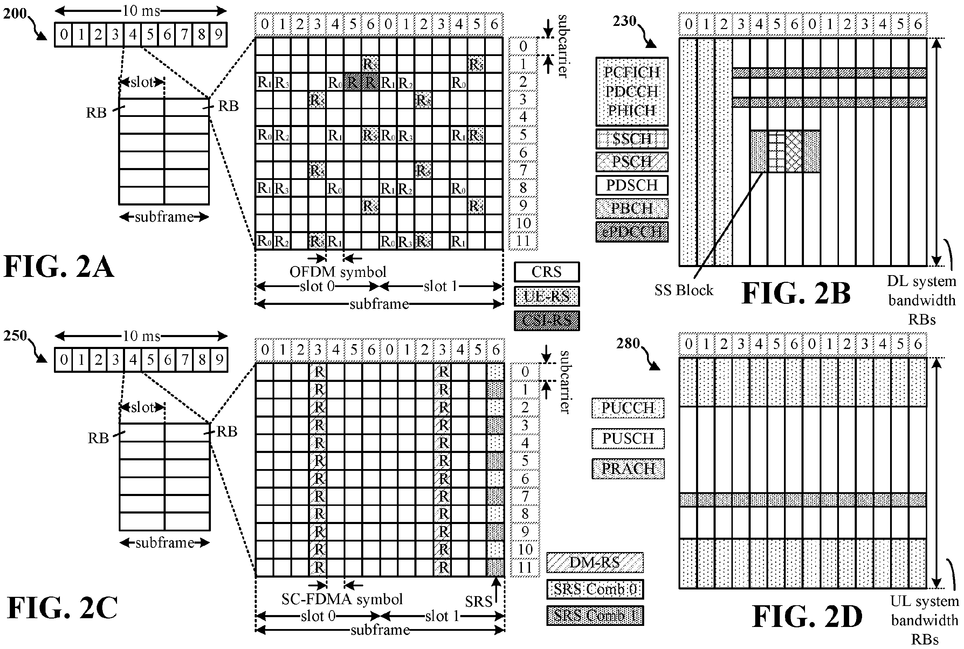

FIG. 2A is a diagram 200 illustrating an example of a DL frame structure. FIG. 2B is a diagram 230 illustrating an example of channels within the DL frame structure. FIG. 2C is a diagram 250 illustrating an example of an UL frame structure. FIG. 2D is a diagram 280 illustrating an example of channels within the UL frame structure. Other wireless communication technologies may have a different frame structure and/or different channels. A frame (10 ms) may be divided into 10 equally sized subframes. Each subframe may include two consecutive time slots. A resource grid may be used to represent the two time slots, each time slot including one or more time concurrent resource blocks (RBs) (also referred to as physical RBs (PRBs)). The resource grid is divided into multiple resource elements (REs). For a normal cyclic prefix, an RB may contain 12 consecutive subcarriers in the frequency domain and 7 consecutive symbols (for DL, OFDM symbols; for UL, SC-FDMA symbols) in the time domain, for a total of 84 REs. For an extended cyclic prefix, an RB may contain 12 consecutive subcarriers in the frequency domain and 6 consecutive symbols in the time domain, for a total of 72 REs. The number of bits carried by each RE depends on the modulation scheme.

As illustrated in FIG. 2A, some of the REs carry DL reference (pilot) signals (DL-RS) for channel estimation at the UE. The DL-RS may include cell-specific reference signals (CRS) (also sometimes called common RS), UE-specific reference signals (UE-RS), and channel state information reference signals (CSI-RS). FIG. 2A illustrates CRS for antenna ports 0, 1, 2, and 3 (indicated as R₀, Ri, R₂, and R₃, respectively), UE-RS for antenna port 5 (indicated as R₅), and CSI-RS for antenna port 15 (indicated as R).

FIG. 2B illustrates an example of various channels within a DL subframe of a frame. The physical control format indicator channel (PCFICH) is within symbol 0 of slot 0, and carries a control format indicator (CFI) that indicates whether the physical downlink control channel (PDCCH) occupies 1, 2, or 3 symbols (FIG. 2B illustrates a PDCCH that occupies 3 symbols). The PDCCH carries downlink control information (DCI) within one or more control channel elements (CCEs), each CCE including nine RE groups (REGs), each REG including four consecutive REs in an OFDM symbol. A UE may be configured with a UE-specific enhanced PDCCH (ePDCCH) that also carries DCI. The ePDCCH may have 2, 4, or 8 RB pairs (FIG. 2B shows two RB pairs, each subset including one RB pair). The physical hybrid automatic repeat request (ARQ) (HARQ) indicator channel (PHICH) is also within symbol 0 of slot 0 and carries the HARQ indicator (HI) that indicates HARQ acknowledgement (ACK) / negative ACK (NACK) feedback based on the physical uplink shared channel (PUSCH). The primary synchronization channel (PSCH) may be within symbol 6 of slot 0 within subframes 0 and 5 of a frame. The PSCH carries a primary synchronization signal (PSS) that is used by a UE 104 to determine subframe/symbol timing and a physical layer identity. The secondary synchronization channel (SSCH) may be within symbol 5 of slot 0 within subframes 0 and 5 of a frame. The SSCH carries a secondary synchronization signal (SSS) that is used by a UE to determine a physical layer cell identity group number and radio frame timing. Based on the physical layer identity and the physical layer cell identity group number, the UE can determine a physical cell identifier (PCI). Based on the PCI, the UE can determine the locations of the aforementioned DL-RS. The physical broadcast channel (PBCH), which carries a master information block (MIB), may be logically grouped with the PSCH and SSCH to form a synchronization signal (SS) block. The MIB provides a number of RBs in the DL system bandwidth, a PHICH configuration, and a system frame number (SFN). The physical downlink shared channel (PDSCH) carries user data, broadcast system information not transmitted through the PBCH such as system information blocks (SIBs), and paging messages.

As illustrated in FIG. 2C, some of the REs carry demodulation reference signals (DM-RS) for channel estimation at the base station. The UE may additionally transmit sounding reference signals (SRS) in the last symbol of a subframe. The SRS may have a comb structure, and a UE may transmit SRS on one of the combs. The SRS may be used by a base station for channel quality estimation to enable frequency-dependent scheduling on the UL.

FIG. 2D illustrates an example of various channels within an UL subframe of a frame. A physical random access channel (PRACH) may be within one or more subframes within a frame based on the PRACH configuration. The PRACH may include six consecutive RB pairs within a subframe. The PRACH allows the UE to perform initial system access and achieve UL synchronization. A physical uplink control channel (PUCCH) may be located on edges of the UL system bandwidth. The PUCCH carries uplink control information (UCI), such as scheduling requests, a channel quality indicator (CQI), a precoding matrix indicator (PMI), a rank indicator (RI), and HARQ ACK/NACK feedback. The PUSCH carries data, and may additionally be used to carry a buffer status report (BSR), a power headroom report (PHR), and/or UCI.

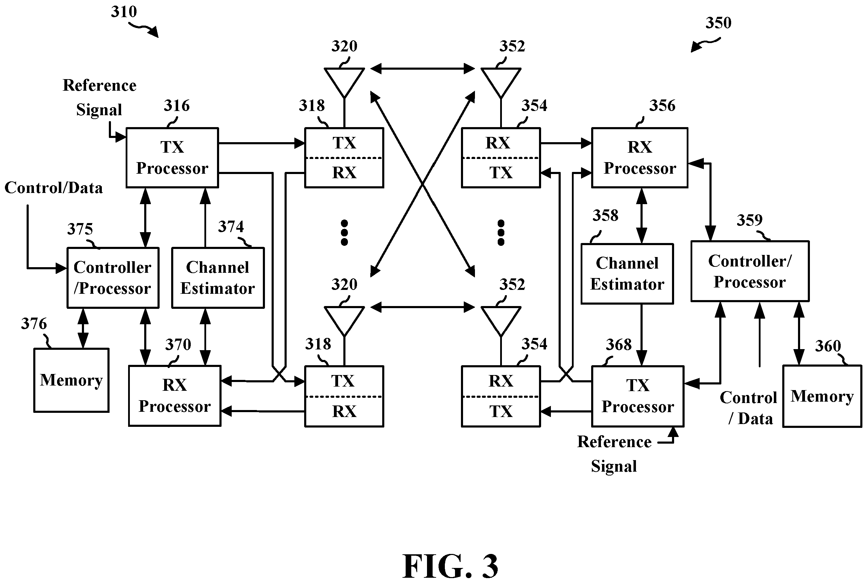

FIG. 3 is a block diagram of a base station 310 in communication with a UE 350 in an access network. In the DL, IP packets from the EPC 160 may be provided to a controller/processor 375. The controller/processor 375 implements layer 3 and layer 2 functionality. Layer 3 includes a radio resource control (RRC) layer, and layer 2 includes a packet data convergence protocol (PDCP) layer, a radio link control (RLC) layer, and a medium access control (MAC) layer. The controller/processor 375 provides RRC layer functionality associated with broadcasting of system information (e.g., MIB, SIBs), RRC connection control (e.g., RRC connection paging, RRC connection establishment, RRC connection modification, and RRC connection release), inter radio access technology (RAT) mobility, and measurement configuration for UE measurement reporting; PDCP layer functionality associated with header compression / decompression, security (ciphering, deciphering, integrity protection, integrity verification), and handover support functions; RLC layer functionality associated with the transfer of upper layer packet data units (PDUs), error correction through ARQ, concatenation, segmentation, and reassembly of RLC service data units (SDUs), re-segmentation of RLC data PDUs, and reordering of RLC data PDUs; and MAC layer functionality associated with mapping between logical channels and transport channels, multiplexing of MAC SDUs onto transport blocks (TBs), demultiplexing of MAC SDUs from TBs, scheduling information reporting, error correction through HARQ, priority handling, and logical channel prioritization.

The transmit (TX) processor 316 and the receive (RX) processor 370 implement layer 1 functionality associated with various signal processing functions. Layer 1, which includes a physical (PHY) layer, may include error detection on the transport channels, forward error correction (FEC) coding/decoding of the transport channels, interleaving, rate matching, mapping onto physical channels, modulation/demodulation of physical channels, and MIMO antenna processing. The TX processor 316 handles mapping to signal constellations based on various modulation schemes (e.g., binary phase-shift keying (BPSK), quadrature phase-shift keying (QPSK), M-phase-shift keying (M-PSK), M-quadrature amplitude modulation (M-QAM)). The coded and modulated symbols may then be split into parallel streams. Each stream may then be mapped to an OFDM subcarrier, multiplexed with a reference signal (e.g., pilot) in the time and/or frequency domain, and then combined together using an Inverse Fast Fourier Transform (IFFT) to produce a physical channel carrying a time domain OFDM symbol stream. The OFDM stream is spatially precoded to produce multiple spatial streams. Channel estimates from a channel estimator 374 may be used to determine the coding and modulation scheme, as well as for spatial processing. The channel estimate may be derived from a reference signal and/or channel condition feedback transmitted by the UE 350. Each spatial stream may then be provided to a different antenna 320 via a separate transmitter 318TX. Each transmitter 318TX may modulate an RF carrier with a respective spatial stream for transmission.

At the UE 350, each receiver 354RX receives a signal through its respective antenna 352. Each receiver 354RX recovers information modulated onto an RF carrier and provides the information to the receive (RX) processor 356. The TX processor 368 and the RX processor 356 implement layer 1 functionality associated with various signal processing functions. The RX processor 356 may perform spatial processing on the information to recover any spatial streams destined for the UE 350. If multiple spatial streams are destined for the UE 350, they may be combined by the RX processor 356 into a single OFDM symbol stream. The RX processor 356 then converts the OFDM symbol stream from the time-domain to the frequency domain using a Fast Fourier Transform (FFT). The frequency domain signal comprises a separate OFDM symbol stream for each subcarrier of the OFDM signal. The symbols on each subcarrier, and the reference signal, are recovered and demodulated by determining the most likely signal constellation points transmitted by the base station 310. These soft decisions may be based on channel estimates computed by the channel estimator 358. The soft decisions are then decoded and deinterleaved to recover the data and control signals that were originally transmitted by the base station 310 on the physical channel. The data and control signals are then provided to the controller/processor 359, which implements layer 3 and layer 2 functionality.

The controller/processor 359 can be associated with a memory 360 that stores program codes and data. In some examples, the program codes may include program codes for signaling UE capability information in accordance with the techniques described herein. The data may include UE capability information. The memory 360 may be referred to as a computer-readable medium. In the UL, the controller/processor 359 provides demultiplexing between transport and logical channels, packet reassembly, deciphering, header decompression, and control signal processing to recover IP packets from the EPC 160. The controller/processor 359 is also responsible for error detection using an ACK and/or NACK protocol to support HARQ operations.

Similar to the functionality described in connection with the DL transmission by the base station 310, the controller/processor 359 provides RRC layer functionality associated with system information (e.g., MIB, SIBs) acquisition, RRC connections, and measurement reporting; PDCP layer functionality associated with header compression / decompression, and security (ciphering, deciphering, integrity protection, integrity verification); RLC layer functionality associated with the transfer of upper layer PDUs, error correction through ARQ, concatenation, segmentation, and reassembly of RLC SDUs, re-segmentation of RLC data PDUs, and reordering of RLC data PDUs; and MAC layer functionality associated with mapping between logical channels and transport channels, multiplexing of MAC SDUs onto TBs, demultiplexing of MAC SDUs from TBs, scheduling information reporting, error correction through HARQ, priority handling, and logical channel prioritization.

Channel estimates derived by a channel estimator 358 from a reference signal or feedback transmitted by the base station 310 may be used by the TX processor 368 to select the appropriate coding and modulation schemes, and to facilitate spatial processing. The spatial streams generated by the TX processor 368 may be provided to different antenna 352 via separate transmitters 354TX. Each transmitter 354TX may modulate an RF carrier with a respective spatial stream for transmission.

The UL transmission is processed at the base station 310 in a manner similar to that described in connection with the receiver function at the UE 350. Each receiver 318RX receives a signal through its respective antenna 320. Each receiver 318RX recovers information modulated onto an RF carrier and provides the information to a RX processor 370. In some examples, the information provided to the RX processor 370 may include UE capability information.

The controller/processor 375 can be associated with a memory 376 that stores program codes and data. The memory 376 may be referred to as a computer-readable medium. In the UL, the controller/processor 375 provides demultiplexing between transport and logical channels, packet reassembly, deciphering, header decompression, control signal processing to recover IP packets from the UE 350. IP packets from the controller/processor 375 may be provided to the EPC 160. The controller/processor 375 is also responsible for error detection using an ACK and/or NACK protocol to support HARQ operations.

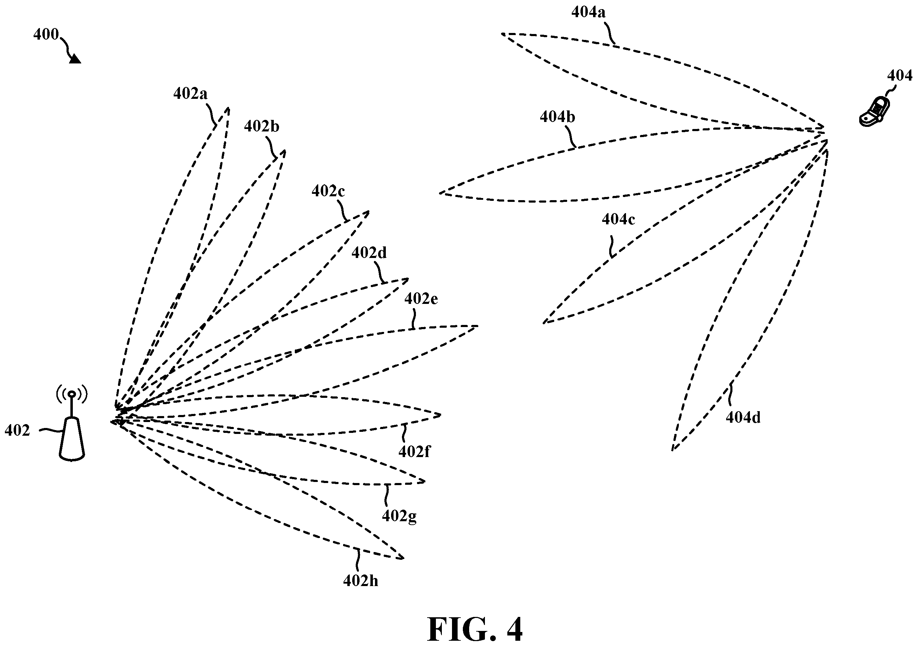

FIG. 4 is a diagram 400 illustrating a base station 402 in communication with a UE 404. Referring to FIG. 4, the base station 402 may transmit a beamformed signal to the UE 404 in one or more of the directions 402a, 402b, 402c, 402d, 402e, 402f, 402g, 402h. In some examples, the beamformed signal may carry a UE capability request. In other examples, the beamformed signal may not carry a UE capability request. The UE 404 may receive the beamformed signal from the base station 402 in one or more receive directions 404a, 404b, 404c, 404d. The UE 404 may also transmit a beamformed signal to the base station 402 in one or more of the directions 404a-404d. In some examples, the beamformed signal may carry UE capability information. The base station 402 may receive the beamformed signal from the UE 404 in one or more of the receive directions 402a-402h. The base station 402 / UE 404 may perform beam training to determine the best receive and transmit directions for each of the base station 402 / UE 404. The transmit and receive directions for the base station 402 may or may not be the same. The transmit and receive directions for the UE 404 may or may not be the same.

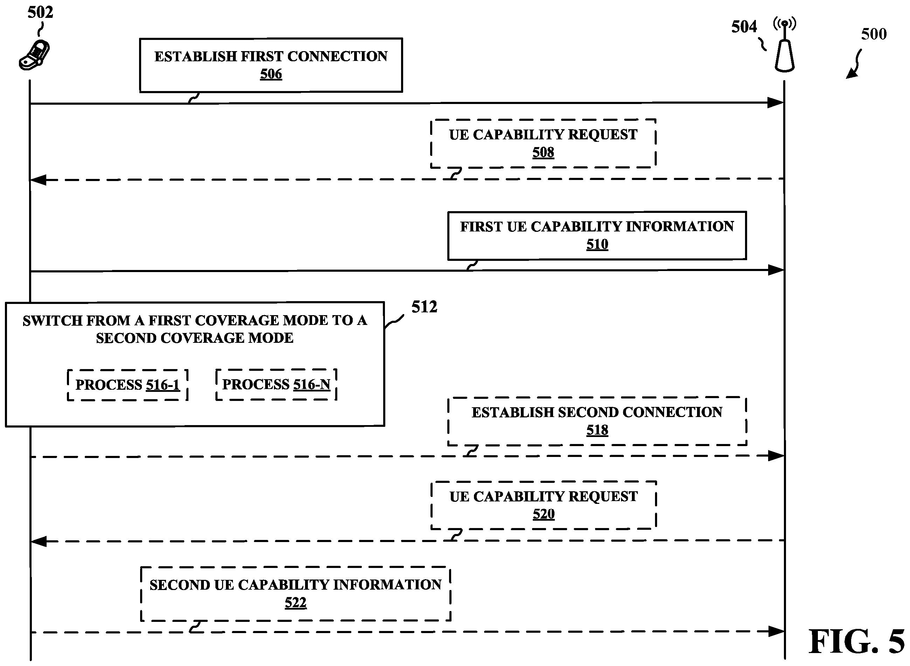

FIG. 5 illustrates an example flow diagram 500 between the UE 502 and the base station 504 in accordance with the techniques described herein. In other examples, one or more techniques described herein may be added to the flow diagram 500 and/or one or more techniques depicted in the flow diagram may be removed. The UE 502 may be any UE configured to perform one or more techniques described herein. For example, UE 502 may be any UE described herein, such as UE 104, UE 350, UE 404, apparatus 802, apparatus 902'or any other UE configured to perform one or more techniques described herein. Similarly, the base station 504 may be any base station configured to perform one or more techniques described herein. For example, base station 504 may be any base station described herein, such as base station 102, base station 180, base station 310, base station 402, or any other base station configured to perform one or more techniques described herein.

In the example of FIG. 5, the UE 502 may be configured to establish a first connection (e.g., a first radio resource control (RRC) connection) with the base station 504, shown by block 506. The base station 504 may be configured to send a UE capability request 508 (which may be referred to as a UE capability enquiry) to the UE 502. The UE capability request 508 may be associated with the first connection. The UE 502 may be configured to receive the UE capability request 508. In some examples, the UE 502 may be configured to send first UE capability information 510 in response to a first trigger. For example, the first trigger may include receiving the UE capability request 508 from the base station 504. In some examples, the UE 502 may be configured to operate in a first coverage mode (e.g., a non-CE mode). Following transmission of the first UE capability information 510, the UE 502 may receive information (e.g., one or more information-bearing signals) in accordance with the UE 502's capabilities in the first coverage mode. In accordance with the techniques described herein, the first UE capability information 510 may include information regarding the UE 502's capabilities in one or more coverage modes (e.g., a plurality of coverage modes).

At block 512, the UE 502 may be configured to switch from a first coverage mode to a second coverage mode. For example, the UE may be configured to switch from being configured to operate in a first coverage mode to being configured to operate in a second coverage mode. The UE 502 may be configured to perform one or more processes to switch from the first coverage mode to the second coverage mode. The one or more processes are depicted as process 516-1 to 516-N, where N is a positive integer and 516-N represents the Nth process. For example, the UE 502 may be configured to determine a property of a signal received from the base station 504. In such an example, this signal property determination may be referred to as process 516-1. In some examples, the property of the signal may include quality of the signal, the received power level of the signal, and/or one or more other signal properties. The UE 502 may be configured to switch from the first coverage mode to the second coverage mode based on the property of the signal. The UE 502 may be configured to perform one or more additional processes. For example, the UE 502 may be configured to determine whether the property of the signal is less than a threshold (which may be referred to as a signal property threshold). For example, when the property of the signal is signal quality, the threshold may be a signal quality threshold. As another example, when the property of the signal is the received power level of the signal, the threshold may be a received power level threshold. In such an example, this determination of whether the signal property is less than the signal property threshold may be referred to as process 516-2. The UE 502 may be configured to switch from the first coverage mode to the second coverage mode based on the signal property being less than the signal property threshold. The UE 502 may be configured to not switch from the first coverage mode to the second coverage mode based on the signal property being greater than or equal to the signal property threshold.

In some examples, the first coverage mode may be a non-CE mode (e.g., a normal coverage mode) and the second coverage mode may be a CE mode (e.g., CE mode A or CE mode B). In other examples, the first coverage mode may be a CE mode (e.g., CE mode A or CE mode B) and the second coverage mode may be a non-CE mode (e.g., a normal coverage mode). In other examples, the first coverage mode may be a first CE mode (e.g., CE mode A) and the second coverage mode may be a second CE mode (e.g., CE mode B).

At block 518, the UE 502 may be configured to establish a second connection (e.g., a second radio resource control (RRC) connection) with the base station 504. The second connection may be a new connection that replaces the first connection. For example, the second connection may be a new RRC connection that replaces the first connection in an example where the first connection is an RRC connection. As another example, the second connection may be an RRC re-configuration based on the switch from the first coverage mode to the second coverage mode. The UE 502 may be configured to send second UE capability information 522 in response to a second trigger. The second UE capability information 522 may be based on a predetermination of one or more capabilities of the UE 502 that may differ between the first coverage mode and the second coverage mode. As an example, the second UE capability information may be based on whether one or more capabilities of the UE differs or is the same between the first coverage mode and the second coverage mode.

In some examples, the second trigger may be different from the first trigger. For example, the second trigger may not include receiving a UE capability request from the base station 504. As another example, the second trigger may include switching from a first coverage mode to a second coverage mode. In other examples, the second trigger may be the same as the first trigger in that the second trigger may include the receipt of a UE capability request. For example, the base station 504 may be configured to send a UE capability request 520 (which may be referred to as a UE capability enquiry) to the UE 502. In this example, the UE capability request 520 is different from the UE capability request 508. The UE 502 may be configured to receive the UE capability request 520.

In some examples, the UE 502 may be configured to operate in the second coverage mode (e.g., a CE mode, such as CE mode A or CE mode B). Following transmission of the second UE capability information 520, the UE 502 may receive information (e.g., one or more information-bearing signals) in accordance with the UE 502's capabilities in the second coverage mode.

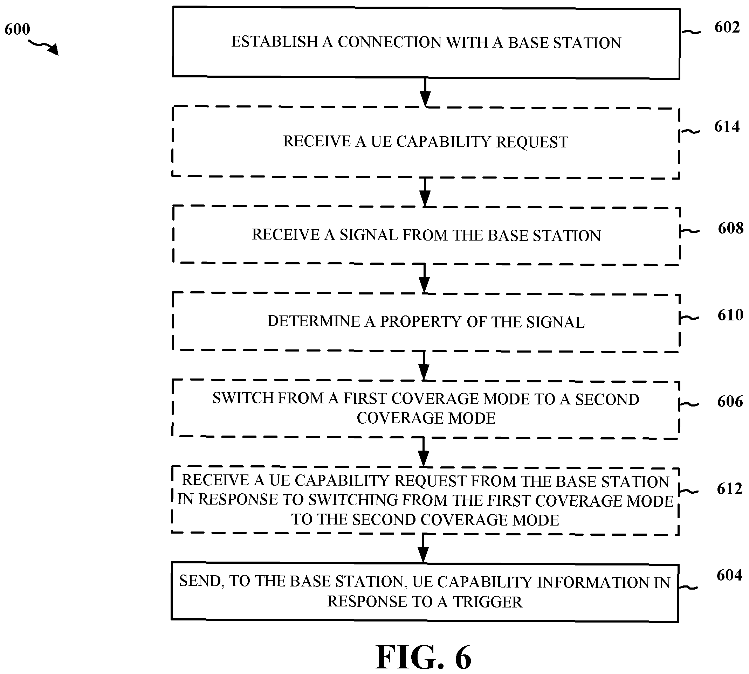

FIG. 6 is a flowchart 600 of a method of wireless communication. The method may be performed by a UE (e.g., UE 104, UE 350, UE 404, UE 502, apparatus 802, apparatus 902' or another UE, device, or apparatus described herein).

At 602, the UE may be configured to establish a connection with a base station. In some examples, the connection includes a communication channel between the UE and the base station. In some examples, the connection may be an RRC connection. At block 604, the UE may be configured to send, to the base station, UE capability information in response to a trigger. In some examples, the UE capability information may be based on a predetermination of one or more capabilities of the UE that may differ between a first coverage mode and a second coverage mode. As an example, the UE capability information may be based on whether one or more capabilities of the UE differs or is the same between a first coverage mode and a second coverage mode. The predetermination may be based on a standard and/or one or more base station capabilities. In one example, the first coverage mode may be a non-coverage enhanced mode (e.g., a normal coverage mode) and the second coverage mode may be a coverage enhanced mode. In another example, the first coverage mode may be a coverage enhanced mode and the second coverage mode may be a non-coverage enhanced mode. In another example, the first coverage mode may be a first coverage enhanced mode and the second coverage mode may be a second coverage enhanced mode.

In some examples, the UE may be configured to switch from the first coverage mode to the second coverage mode, depicted at block 606. The trigger may include the switching from the first coverage mode to the second coverage mode.

In some examples, the UE may be configured to receive a signal from the base station, depicted at block 608. At block 610, the UE may be configured to determine a property of the signal. In such examples, the switching from the first coverage mode to the second coverage mode may be based on the property of the signal.

In some examples, the UE may be configured to receive a UE capability request from the base station in response to switching from the first coverage mode to the second coverage mode, depicted at block 612. In such examples, the trigger may include the receipt of the UE capability request.

In some examples, the UE may be configured to receive, at block 614, a UE capability request from the base station. In such examples, the trigger may not include the receipt of the UE capability request. The UE capability request may, in some examples, be associated with the connection established at block 602. In such examples, the trigger may not include the receipt of the UE capability request associated with the connection established at block 602.

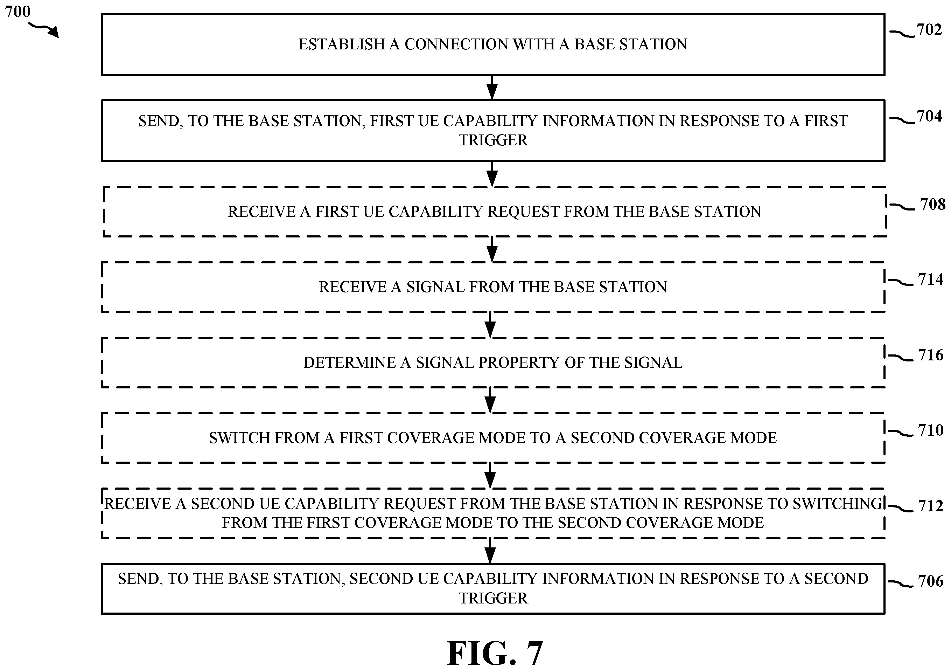

FIG. 7 is a flowchart 700 of a method of wireless communication. The method may be performed by a UE (e.g., UE 104, UE 350, UE 404, UE 502, apparatus 802, apparatus 902' or another UE, device, or apparatus described herein).

At 702, the UE may be configured to establish a connection with a base station. For example, the UE may be configured to establish the connection with the base station in accordance with a first coverage mode. At block 704, the UE may be configured to send, to the base station, first UE capability information in response to a first trigger. At block 706, the UE may be configured to send, to the base station, second UE capability information in response to a second trigger. The second trigger may be different from the first trigger. The second UE capability information may be based on a predetermination of one or more capabilities of the UE that may differ between the first coverage mode and the second coverage mode. The second UE capability information may be based on a predetermination of one or more capabilities of the UE that may differ between the first coverage mode and the second coverage mode.

In some examples, the UE may be configured to receive, at block 708, a first UE capability request from the base station. In such examples, the first trigger may include the receipt of the first UE capability request. The first UE capability request may, in some examples, be associated with the connection established at block 702. In such examples, the first trigger may include the receipt of the UE capability request associated with the connection established at block 702.

At block 710, the UE may be configured to switch from a first coverage mode to a second coverage mode. In some examples, the UE may be configured to receive, at block 712, a second UE capability request from the base station in response to switching from the first coverage mode to the second coverage mode. The second trigger may include the receipt of the second UE capability request and/or the switching from the first coverage mode to the second coverage mode.

In some examples, the UE may be configured to receive a signal from the base station, as depicted at block 714. At block 716, the UE may be configured to determine a property of the signal. The switching from the first coverage mode to the second coverage mode may be based on the property of the signal.

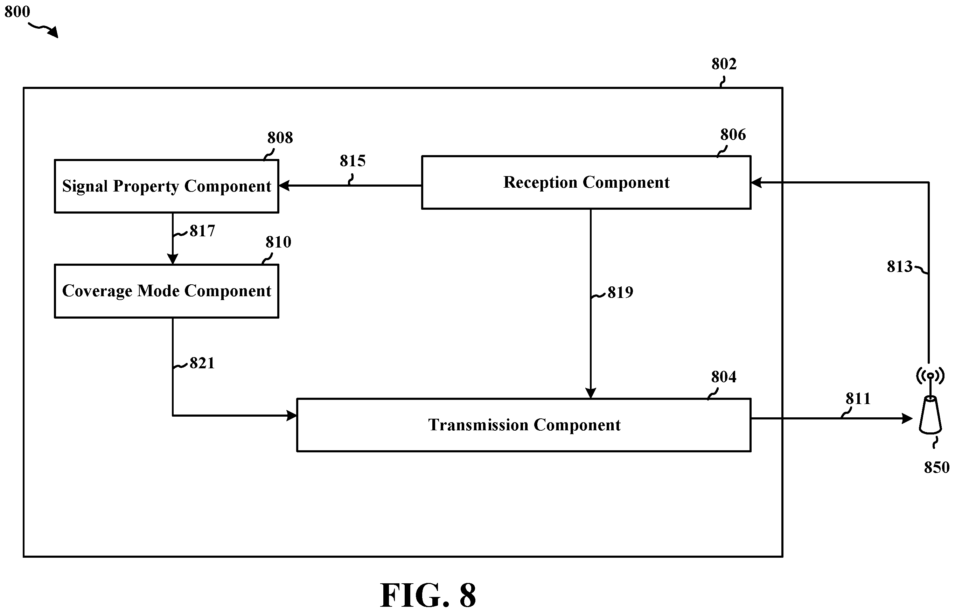

FIG. 8 is a conceptual data flow diagram 800 illustrating an example data flow between different means/components in apparatus 802. The apparatus 802 may be a UE. For example, the apparatus 802 may be any UE configured to perform one or more techniques described herein. For example, the apparatus 802 may be any UE described herein, such as UE 104, UE 350, UE 404, UE 502, or any other UE configured to perform one or more techniques described herein.

The apparatus 802 may include a transmission component 804, a reception component 806, a signal property component 808, and a coverage mode component 810.

The transmission component 804 may be configured to perform one or more transmission functions. For example, the transmission component 804 may be configured to establish a connection with a base station (e.g., base station 850). The data flow 811 may represent one or more data flows from the transmission component 804 to the base station 850. For example, the data flow 811 may represent the apparatus 802 establishing a connection with the base station 850. In this example, the data flow 811 may include information for establishing a connection with the base station 850. For example, the data flow 811 may include a connection request or other information relating establishing a connection. In some examples, the connection may be an RRC connection.

As another example, the transmission component 804 may be configured to send UE capability information in response to a trigger to the base station 850. For example, the transmission component 804 may be configured to send first UE capability information in response to a first trigger to the base station 850, and the transmission component 804 may be configured to send second UE capability information in response to a second trigger to the base station 850. The data flow 811 may represent UE capability information in this transmission function example.

The reception component 806 may be configured to perform one or more transmission functions. For example, the reception component 806 may be configured to receive a UE capability request from the base station. As another example, the reception component 806 may be configured to receive a signal from the base station 850. As another example, the reception component 806 may be configured to receive a UE capability request from the base station 850 in response to switching from a first coverage mode to a second coverage mode. The data flow 813 may represent one or more data flows. For example, the data flow 813 may represent one or more UE capability requests and/or a signal. The data flow 819 may represent one or more UE capability requests. In some examples, the data flow 819 may be described as a trigger for the transmission component for sending UE capability information.

The signal property component 808 may be configured to determine a property of the signal received from the base station 850. The data flow 815 may represent the signal (or information corresponding to the signal) received by the reception component 806 from the base station 850. For example, the signal property component 808 may be configured to receive the signal from the reception component 806. The data flow 817 may represent the signal property determined by the signal property component 808.

The coverage mode component 810 may be configured to switch from a first coverage mode to a second coverage mode. For example, the coverage component 804 may be configured to switch from the first coverage mode to the second coverage mode based on the signal property determined by signal property component 804. As another example, the coverage component 810 may be configured to switch from the first coverage mode to the second coverage based on the signal property being less than a signal property threshold. The data flow 821 may represent information representative of the coverage mode switch having been initiated and/or completed by the coverage mode component 810. In some examples, the data flow 821 may be described as a trigger for the transmission component for sending UE capability information.

As described above, the transmission component 804 may be configured to send UE capability information in response various triggers. In some examples, a trigger may include information in data flow 821 and/or data flow 819. For example, the trigger may include the coverage mode component switching the coverage mode. As another example, the trigger may include receipt of a UE capability request.

The apparatus 802 may include additional components that perform each of the blocks of the algorithm in the aforementioned flowcharts of FIGS. 6 and 7. As such, each block in the aforementioned flowcharts of FIGS. 6 and 7 may be performed by a component and the apparatus 802 may include one or more of those components. The components may be one or more hardware components specifically configured to carry out the stated processes/algorithm, implemented by a processor configured to perform the stated processes/algorithm, stored within a computer-readable medium for implementation by a processor, or some combination thereof.

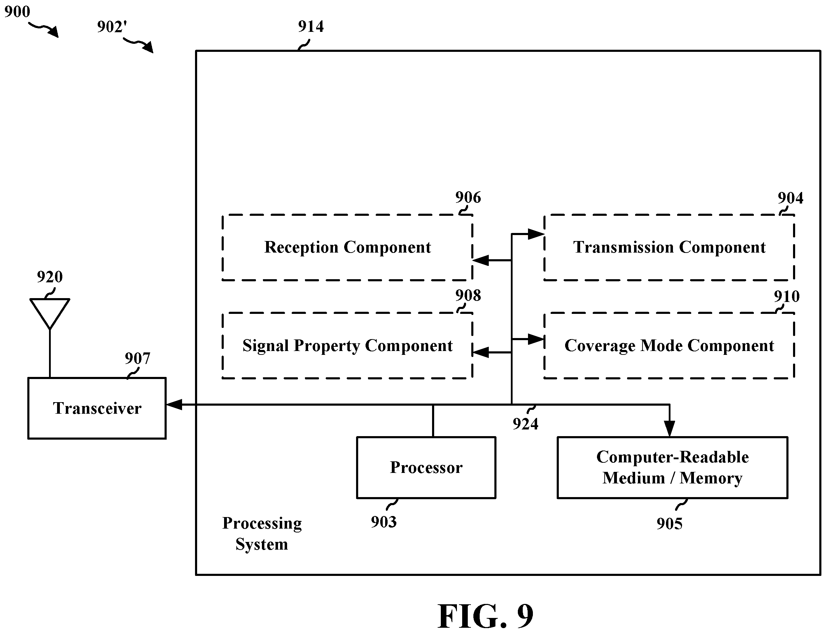

FIG. 9 is a diagram 900 illustrating an example of a hardware implementation for an apparatus 902' employing a processing system 914. The processing system 914 may be implemented with a bus architecture, represented generally by the bus 924. The bus 924 may include any number of interconnecting buses and bridges depending on the specific application of the processing system 914 and the overall design constraints. The bus 924 may link together various circuits including one or more processors and/or hardware components, represented by the processor 903, the transmission component 904, the reception component 906, the signal property component 908, the coverage mode component 910, and the computer-readable medium / memory 905. The bus 924 may also link various other circuits such as timing sources, peripherals, voltage regulators, and power management circuits, which are well known in the art, and therefore, will not be described any further.

The processing system 914 may be coupled to a transceiver 907. The transceiver 907 is coupled to one or more antennas 920. The transceiver 907 provides a means for communicating with various other apparatus over a transmission medium. The transceiver 907 receives a signal from the one or more antennas 920, extracts information from the received signal, and provides the extracted information to the processing system 914, specifically the reception component 906. In addition, the transceiver 907 receives information from the processing system 914, specifically the transmission component 904, and based on the received information, generates a signal to be applied to the one or more antennas 920. The processing system 914 includes a processor 903 coupled to a computer-readable medium / memory 905. The processor 903 is responsible for general processing, including the execution of software stored on the computer-readable medium / memory 905. The software, when executed by the processor 903, causes the processing system 914 to perform the various functions described herein for any particular apparatus. The computer-readable medium / memory 905 may also be used for storing data that is manipulated by the processor 903 when executing software. The processing system 914 further includes at least one of the components the transmission component 904, the reception component 906, the signal property component 908, or the coverage mode component 910. The components may be software components running in the processor 903, resident/stored in the computer readable medium / memory 905, one or more hardware components coupled to the processor 903, or some combination thereof. The processing system 914 may be a component of any UE described herein (e.g., UE 104, UE 350, UE 404, UE 502, apparatus 802, or any other UE configured to perform one or more techniques described herein. For example, the processing system 914 may include the memory 360 and/or at least one of the TX processor 368, the RX processor 356, and the controller/processor 359.

In some examples, the apparatus 802/902' for wireless communication includes means for establishing a connection with a base station, means for receiving a UE capability request from the base station; means for receiving a signal from the base station; means for determining a property of the signal; means for switching from a first coverage mode to a second coverage mode; means for receiving for a UE capability request from the base station in response to switching from the first coverage mode to the second coverage mode; and means for sending UE capability information in response to a trigger. In some examples, the apparatus 802/902' for wireless communication includes means for establishing a connection with a base station; means for sending first UE capability information in response to a first trigger; means for receiving a first UE capability request from the base station; means for receiving a signal from the base station; means for determining a property of the signal; means for switching from a first coverage mode to a second coverage mode; means for receiving a second UE capability request from the base station in response to switching from the first coverage mode to the second coverage mode; and means for sending second UE capability information in response to a second trigger. The aforementioned means may be one or more of the aforementioned components of the apparatus 802 and/or the processing system 914 of the apparatus 902' configured to perform the functions recited by the aforementioned means. As described herein, the processing system 914 may include the TX Processor 368, the RX Processor 356, and the controller/processor 359. As such, in one configuration, the aforementioned means may be the TX Processor 368, the RX Processor 356, and the controller/processor 359 configured to perform the functions recited by the aforementioned means.

It is understood that the specific order or hierarchy of blocks in the processes / flowcharts disclosed is an illustration of exemplary approaches. Based upon design preferences, it is understood that the specific order or hierarchy of blocks in the processes / flowcharts may be rearranged. Further, some blocks may be combined or omitted. The accompanying method claims present elements of the various blocks in a sample order, and are not meant to be limited to the specific order or hierarchy presented.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but is to be accorded the full scope consistent with the language claims, wherein reference to an element in the singular is not intended to mean "one and only one" unless specifically so stated, but rather "one or more." The word "exemplary" is used herein to mean "serving as an example, instance, or illustration." Any aspect described herein as "exemplary" is not necessarily to be construed as preferred or advantageous over other aspects. Unless specifically stated otherwise, the term "some" refers to one or more. Combinations such as "at least one of A, B, or C," "one or more of A, B, or C," "at least one of A, B, and C," "one or more of A, B, and C," and "A, B, C, or any combination thereof' include any combination of A, B, and/or C, and may include multiples of A, multiples of B, or multiples of C. Specifically, combinations such as "at least one of A, B, or C," "one or more of A, B, or C," "at least one of A, B, and C," "one or more of A, B, and C," and "A, B, C, or any combination thereof' may be A only, B only, C only, A and B, A and C, B and C, or A and B and C, where any such combinations may contain one or more member or members of A, B, or C. Moreover, nothing disclosed herein is intended to be dedicated to the public regardless of whether such disclosure is explicitly recited in the claims. The words "module," "mechanism," "element," "device," and the like may not be a substitute for the word "means." As such, no claim element is to be construed as a means plus function unless the element is expressly recited using the phrase "means for."

## Claims

1. A method of wireless communication of a user equipment, UE (104), comprising:
establishing, by the UE, a connection with a base station (180); and
sending, by the UE to the base station, UE capability information in response to a trigger, wherein:
the UE capability information identifies whether UE support for a capability when operating in a first coverage mode is different than UE support for the capability when operating in a second coverage mode or identifies whether UE support for the capability when operating in the first coverage mode is the same as UE support for the capability when operating in the second coverage mode; and
the UE capability information comprises coverage enhanced capability information indicating only capabilities for which support needs to be differentiated between the first coverage mode and the second coverage mode, wherein either:
the first coverage mode is a non-coverage enhanced mode and the second coverage mode is a coverage enhanced mode; or
the first coverage mode is a first coverage enhanced mode and the second coverage mode is a second coverage enhanced mode.

2. The method of claim 1, further comprising:
switching from the first coverage mode to the second coverage mode, wherein the trigger includes the switching from the first coverage mode to the second coverage mode.

3. The method of claim 2, further comprising:
receiving, by the UE, a signal from the base station; and
determining, by the UE, a property of the signal, wherein the switching from the first coverage mode to the second coverage mode is based on the property of the signal.

4. The method of claim 1, further comprising:
switching from the first coverage mode to the second coverage mode;
receiving, by the UE, a UE capability request from the base station in response to switching from the first coverage mode to the second coverage mode, wherein the trigger includes the receipt of the UE capability request.

5. The method of claim 1, wherein the connection is a Radio Resource Control, RRC, connection.

6. The method of claim 1, wherein one or more non-coverage enhanced mode capabilities apply to at least one coverage enhanced mode of the first and second coverage modes for one or more features not explicitly indicated in the coverage enhanced capability information.

7. A user equipment, UE (104), comprising:
means for establishing a connection with a base station (180); and
means for sending, to the base station, capability information of the UE in response to a trigger, wherein:
the capability information identifies whether UE support for a capability when operating in a first coverage mode is different than UE support for the capability when operating in a second coverage mode or identifies whether UE support for the capability when operating in the first coverage mode is the same as UE support for the capability when operating in the second coverage mode; and
the UE capability information comprises coverage enhanced capability information indicating only capabilities for which support needs to be differentiated between the first coverage mode and the second coverage mode, wherein either:
the first coverage mode is a non-coverage enhanced mode and the second coverage mode is a coverage enhanced mode; or
wherein the first coverage mode is a first coverage enhanced mode and the second coverage mode is a second coverage enhanced mode.

8. The UE of claim 7, further comprising:
means for switching from the first coverage mode to the second coverage mode, wherein the trigger includes the switching from the first coverage mode to the second coverage mode.

9. The UE of claim 8, further comprising:
means for receiving a signal from the base station; and
means for determining a property of the signal, wherein the means for switching from the first coverage mode to the second coverage mode is configured to switch from the first coverage mode to the second coverage mode based on the property of the signal.

10. The UE of claim 7, further comprising:
means for switching from the first coverage mode to the second coverage mode;
means for receiving a capability request from the base station in response to switching from the first coverage mode to the second coverage mode, wherein the trigger includes the receipt of the capability request.

11. The UE of claim 7, wherein the connection is a Radio Resource Control, RRC, connection.

12. The UE of claim 7, wherein one or more non-coverage enhanced mode capabilities apply to at least one coverage enhanced mode of the first and second coverage modes for one or more features not explicitly indicated in the coverage enhanced capability information.

13. A non-transitory computer-readable medium having instructions stored thereon that, when executed by at least one processor of a UE, causes the at least one processor to perform a method in accordance with any of claims 1 to 6.

## Patentansprüche

1. Ein Verfahren für Drahtloskommunikation einer Nutzereinrichtung bzw. UE (UE = user equipment) (104), das Folgendes aufweist:
Aufbauen, durch die UE, einer Verbindung mit einer Basisstation (180); und
Senden, durch die UE an die Basisstation, von UE-Fähigkeitsinformation ansprechend auf einen Auslöser, wobei:
die UE-Fähigkeitsinformation identifiziert, ob UE-Unterstützung für eine Fähigkeit, wenn sie in einem ersten Abdeckungsmodus arbeitet, anders ist als UE-Unterstützung für die Fähigkeit, wenn sie in einem zweiten Abdeckungsmodus arbeitet, oder identifiziert ob UE-Unterstützung für die Fähigkeit, wenn sie in dem ersten Abdeckungsmodus arbeitet, die gleiche ist wie UE-Unterstützung für die Fähigkeit, wenn sie in dem zweiten Abdeckungsmodus arbeitet; und
die UE-Fähigkeitsinformation Abdeckung-Verbessert-Fähigkeitsinformation aufweist, die nur Fähigkeiten anzeigt, für welche Unterstützung differenziert werden muss zwischen dem ersten Abdeckungsmodus und dem zweiten Abdeckungsmodus, wobei entweder:
der erste Abdeckungsmodus ein nicht abdeckungsverbesserter Modus ist und der zweite Abdeckungsmodus einen abdeckungsverbesserter Modus ist; oder
der erste Abdeckungsmodus ein erster abdeckungsverbesserter Modus ist, und der zweite Abdeckungsmodus ein zweiter abdeckungsverbesserter Modus ist.

2. Verfahren nach Anspruch 1, das weiter Folgendes aufweist:
Wechseln von dem ersten Abdeckungsmodus zu dem zweiten Abdeckungsmodus, wobei der Auslöser das Wechseln von dem ersten Abdeckungsmodus zu dem zweiten Abdeckungsmodus beinhaltet.

3. Verfahren nach Anspruch 2, das weiter Folgendes aufweist:
Empfangen, durch die UE, eines Signals von der Basisstation; und
Bestimmen, durch die UE, einer Eigenschaft des Signals, wobei das Schalten von dem ersten Abdeckungsmodus zu dem zweiten Abdeckungsmodus auf der Eigenschaft des Signals basiert.

4. Verfahren nach Anspruch 1, das weiter Folgendes aufweist:
Wechseln von dem ersten Abdeckungsmodus zu dem zweiten Abdeckungsmodus;
Empfangen, durch die UE, einer UE-Fähigkeitsanfrage von der Basisstation ansprechend auf Wechseln von dem ersten Abdeckungsmodus zu dem zweiten Abdeckungsmodus, wobei der Auslöser den Empfang der UE-Fähigkeitsanfrage beinhaltet.

5. Verfahren nach Anspruch 1, wobei die Verbindung eine Funkressourcensteuerungs- bzw. RRC-Verbindung (RRC = Radio Resource Control) ist.

6. Verfahren nach Anspruch 1, wobei eine oder mehrere Fähigkeiten eines nicht abdeckungsverbesserten Modus für wenigstens einen abdeckungsverbesserten Modus von dem ersten und zweiten Abdeckungsmodus für ein oder mehrere Merkmale gelten, die nicht explizit in der Abdeckung-Verbessert-Fähigkeitsinformation angezeigt werden.

7. Eine Nutzereinrichtung bzw. UE (UE = user equipment) (104), die Folgendes aufweist:
Mittel zum Aufbauen einer Verbindung mit einer Basisstation (180); und
Mittel zum Senden, an die Basisstation, von Fähigkeitsinformation der UE ansprechend auf einen Auslöser, wobei:
die Fähigkeitsinformation identifiziert, ob UE-Unterstützung für eine Fähigkeit, wenn sie in einem ersten Abdeckungsmodus arbeitet, anders ist als UE-Unterstützung für die Fähigkeit, wenn sie in einem zweiten Abdeckungsmodus arbeitet, oder identifiziert, ob UE-Unterstützung für die Fähigkeit, wenn sie in dem ersten Abdeckungsmodus arbeitet, die gleiche ist wie UE-Unterstützung für die Fähigkeit, wenn sie in dem zweiten Abdeckungsmodus arbeitet; und
die UE-Fähigkeitsinformation Abdeckung-Verbessert-Fähigkeitsinformation aufweist, die nur Fähigkeiten anzeigt, für welche Unterstützung differenziert werden muss zwischen dem ersten Abdeckungsmodus und dem zweiten Abdeckungsmodus, wobei entweder:
der erste Abdeckungsmodus ein nicht abdeckungsverbesserter Modus ist und der zweite Abdeckungsmodus ein abdeckungsverbesserter Modus ist; oder
wobei der erste Abdeckungsmodus ein erster abdeckungsverbesserter Modus ist, und der zweite Abdeckungsmodus ein zweiter abdeckungsverbesserter Modus ist.

8. UE nach Anspruch 7, die weiter Folgendes aufweist:
Mittel zum Wechseln von dem ersten Abdeckungsmodus zu dem zweiten Abdeckungsmodus, wobei der Auslöser das Wechseln von dem ersten Abdeckungsmodus zu dem zweiten Abdeckungsmodus beinhaltet.

9. UE nach Anspruch 8, die weiter Folgendes aufweist:
Mittel zum Empfangen eines Signals von der Basisstation; und
Mittel zum Bestimmen einer Eigenschaft des Signals, wobei die Mittel zum Wechseln von dem ersten Abdeckungsmodus zu dem zweiten Abdeckungsmodus konfiguriert sind zum Wechseln von dem ersten Abdeckungsmodus zu dem zweiten Abdeckungsmodus basierend auf der Eigenschaft des Signals.

10. UE nach Anspruch 7, die weiter Folgendes aufweist:
Mittel zum Wechseln von dem ersten Abdeckungsmodus zu dem zweiten Abdeckungsmodus;
Mittel zum Empfangen einer Fähigkeitsanfrage von der Basisstation ansprechend auf Wechseln von dem ersten Abdeckungsmodus zu dem zweiten Abdeckungsmodus, wobei der Auslöser den Empfang der Fähigkeitsanfrage beinhaltet.

11. UE nach Anspruch 7, wobei die Verbindung eine Funkressourcensteuerungs- bzw. RRC-Verbindung (RRC = Radio Resource Control) ist.

12. UE nach Anspruch 7, wobei eine oder mehrere Fähigkeiten eines nicht abdeckungsverbesserten Modus auf wenigstens einen abdeckungsverbesserten Modus des ersten und zweiten Abdeckungsmodus für eine oder mehrere Merkmale anwendbar sind, die nicht explizit in der Abdeckung-Verbessert-Fähigkeitsinformation angezeigt werden.

13. Ein nicht transitorisches computerlesbares Medium mit darauf gespeicherten Instruktionen, die, wenn sie durch wenigstens einen Prozessor einer UE ausgeführt werden, den wenigstens einen Prozessor veranlassen zum Durchführen eines Verfahrens gemäß einem der Ansprüche 1 bis 6.

## Revendications

1. Un procédé de communication sans fil d'un équipement d'utilisateur, UE (104), comprenant :
l'établissement, par l'UE, d'une connexion avec une station de base (180), et
l'envoi, par l'UE à la station de base, d'informations de capacité d'UE en réponse à un déclencheur, où :
les informations de capacité d'UE identifient si une prise en charge d'UE pour une capacité lors d'un fonctionnement dans un premier mode de couverture est différente d'une prise en charge d'UE pour la capacité lors d'un fonctionnement dans un deuxième mode de couverture ou identifient si une prise en charge d'UE pour la capacité lors d'un fonctionnement dans le premier mode de couverture est la même qu'une prise en charge d'UE pour la capacité lors d'un fonctionnement dans le deuxième mode de couverture, et
les informations de capacité d'UE comprennent des informations de capacité d'amélioration de couverture indiquant uniquement des capacités pour lesquelles la prise en charge nécessite d'être différenciée entre le premier mode de couverture et le deuxième mode de couverture, où soit :
le premier mode de couverture est un mode de non-amélioration de couverture et le deuxième mode de couverture est un mode d'amélioration de couverture, ou
le premier mode de couverture est un premier mode d'amélioration de couverture et le deuxième mode de couverture est un deuxième mode d'amélioration de couverture.

2. Le procédé selon la Revendication 1, comprenant en outre :
la commutation du premier mode de couverture vers le deuxième mode de couverture, où le déclencheur comprend la commutation du premier mode de couverture vers le deuxième mode de couverture.

3. Le procédé selon la Revendication 2, comprenant en outre :
la réception, par l'UE, d'un signal à partir de la station de base, et
la détermination, par l'UE, d'une propriété du signal, où la commutation du premier mode de couverture vers le deuxième mode de couverture est basée sur la propriété du signal.

4. Le procédé selon la Revendication 1, comprenant en outre :
la commutation du premier mode de couverture vers le deuxième mode de couverture,
la réception, par l'UE, d'une demande de capacité d'UE à partir de la station de base en réponse à la commutation du premier mode de couverture vers le deuxième mode de couverture, où le déclencheur comprend la réception de la demande de capacité d'UE.

5. Le procédé selon la Revendication 1, où la connexion est une connexion de commande de ressource radio, RRC.

6. Le procédé selon la Revendication 1, où une ou plusieurs capacités de mode de non-amélioration de couverture s'appliquent à au moins un mode d'amélioration de couverture parmi les premier et deuxième modes de couverture pour une ou plusieurs caractéristiques non explicitement indiquées dans les informations de capacité d'amélioration de couverture.

7. Un équipement d'utilisateur, UE (104), comprenant :
un moyen d'établissement d'une connexion avec une station de base (180), et
un moyen d'envoi, à la station de base, d'informations de capacité de l'UE en réponse à un déclencheur, où :
les informations de capacité identifient si une prise en charge d'UE pour une capacité lors d'un fonctionnement dans un premier mode de couverture est différente d'une prise en charge d'UE pour la capacité lors d'un fonctionnement dans un deuxième mode de couverture ou identifient si une prise en charge d'UE pour la capacité lors d'un fonctionnement dans le premier mode de couverture est la même qu'une prise en charge d'UE pour la capacité lors d'un fonctionnement dans le deuxième mode de couverture, et
les informations de capacité d'UE comprennent des informations de capacité d'amélioration de couverture indiquant uniquement des capacités pour lesquelles la prise en charge nécessite d'être différenciée entre le premier mode de couverture et le deuxième mode de couverture, où soit :
le premier mode de couverture est un mode de non-amélioration de couverture et le deuxième mode de couverture est un mode d'amélioration de couverture, ou
où le premier mode de couverture est un premier mode d'amélioration de couverture et le deuxième mode de couverture est un deuxième mode d'amélioration de couverture.

8. L'UE selon la Revendication 7, comprenant en outre :
un moyen de commutation du premier mode de couverture vers le deuxième mode de couverture, où le déclencheur comprend la commutation du premier mode de couverture vers le deuxième mode de couverture.

9. L'UE selon la Revendication 8, comprenant en outre :
un moyen de réception d'un signal à partir de la station de base, et
un moyen de détermination d'une propriété du signal, où le moyen de commutation du premier mode de couverture vers le deuxième mode de couverture est configuré de façon à commuter du premier mode de couverture vers le deuxième mode de couverture en fonction de la propriété du signal.

10. L'UE selon la Revendication 7, comprenant en outre :
un moyen de commutation du premier mode de couverture vers le deuxième mode de couverture,
un moyen de réception d'une demande de capacité à partir de la station de base en réponse à la commutation du premier mode de couverture vers le deuxième mode de couverture, où le déclencheur comprend la réception de la demande de capacité.

11. L'UE selon la Revendication 7, où la connexion est une connexion de commande de ressource radio, RRC.

12. L'UE selon la Revendication 7, où une ou plusieurs capacités de mode de non-amélioration de couverture s'appliquent à au moins un mode d'amélioration de couverture des premier et deuxième modes de couverture pour une ou plusieurs caractéristiques non explicitement indiquées dans les informations de capacité d'amélioration de couverture.

13. Un support lisible par ordinateur non transitoire possédant des instructions conservées en mémoire sur celui-ci qui, lorsqu'elles sont exécutées par au moins un processeur d'un UE, amènent le au moins un processeur à exécuter un procédé selon l'une quelconque des Revendications 1 à 6.
